(19) **Europäisches Patentamt / European Patent Office / Office européen des brevets**

(11) **EP 4 391 547 A1**

(12) **EUROPEAN PATENT APPLICATION**
published in accordance with Art. 153(4) EPC

(43) Date of publication:
**26.06.2024 Bulletin 2024/26**

(21) Application number: **22858559.2**

(22) Date of filing: **24.03.2022**

(51) International Patent Classification (IPC):
**H04N 21/218** (2011.01)    **H04N 21/81** (2011.01)
**H04N 5/77** (2006.01)    **G03B 15/00** (2021.01)
**G06T 5/50** (2006.01)    **B64C 39/02** (2023.01)

(52) Cooperative Patent Classification (CPC):
**H04N 7/185; B64C 39/02; G03B 15/00; G06T 5/50;
H04N 5/77; H04N 21/218; H04N 21/81;
H04N 23/66; H04N 23/698; B64U 10/00**

(86) International application number:
**PCT/KR2022/004125**

(87) International publication number:
**WO 2023/022317 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.08.2021 KR 20210108977**

(71) Applicant: **Idis Co., Ltd.**
**Daegu 42250 (KR)**

(72) Inventors:
• **LEE, Ho-Dong**
  **Daegu 41266 (KR)**
• **LEE, Hu-Dong**
  **Daegu 41231 (KR)**

(74) Representative: **M. Zardi & Co S.A.**
**Via G. B. Pioda, 6**
**6900 Lugano (CH)**

(54) **SYSTEM FOR PROVIDING PANORAMIC IMAGE**

(57)    The present invention relates to a system for providing a panoramic image that allows work to be done conveniently and all at once, from a capturing image by means of a drone to a panoramic web service, and enables real-time monitoring of work progress. The present invention relates to a system for providing a panoramic image that: when taking a picture by means of a drone, uses a drone app (Dfos APP) to allow for taking a picture conveniently with a regular camera; when planar spatial data is converted into panoramic spatial coordinates, makes it possible to display and confirm the planar spatial data through a panorama service, such that existing or necessary planar spatial data can be utilized; and connects a service provider who provides the service (a photographer through a drone) and a service user who needs the service (a user of the panorama service) through the advancement of a business model and activation of the panorama service, thus creating value through active transactions and ultimately generating revenue.

FIG. 1

**Description**

**TECHNICAL FIELD**

The present invention relates to a panoramic image providing system, and more specifically, to a panoramic image providing system, which allows to work collectively and conveniently from capturing images using a drone to providing panoramic web service, and confirm the work progress in real time.

**BACKGROUND ART**

Drones are aircrafts that fly by remote control or autonomously along a designated route without a person on board and are used for mainly military purposes. However, recently, the drones are used in various fields such as transportation, security, and the like, and also for personal use.

The scope of utilizing the drones is gradually expanded, and images captured by the drones are used in various fields.

The images captured by the drones include panoramic images, and various techniques using these panoramic images are being developed, and Patent Documents 1 to 3 are the examples.

Patent Document 1 relates to an aviation safety diagnosis method using a drone including a first camera sensor and a second camera sensor coupled to a gimbal mounted on the drone, and the method comprises the steps of: acquiring a plurality of risk factor detection images using a first camera to create overlapped areas when the drone moves to a location of an inspection target along a set route, acquiring a plurality of second images using a second camera to create overlapped areas, and storing the risk factor detection images and the second images in a data storage unit provided in the drone; acquiring the risk factor detection images and the second images stored in the data storage unit in a wireless or wired manner when the drone lands, forming one risk factor panoramic image by matching the overlapped areas of the plurality of risk factor detection images, and processing the panoramic image as a 3D real image by removing the overlapped areas of the plurality of second images; mapping by projecting panoramic images that detect risk factors onto the 3D real image to determine where the risk factors exist in the 3D real image; and determining safety of the inspection target by determining whether the mapped panoramic image of the inspection target has a defect on the basis of preset criteria, wherein the risk factor detection images are one among a thermal image, an infrared image, and a near-infrared image, and the gimbal includes: a housing having a first hole and a second hole for arranging the first camera sensor and the second camera sensor in the horizontal direction; a first drive motor arranged on one side surface of the housing to tilt the housing up and down; a support unit mounted on the rear side of the housing to extend upward; a second drive motor mounted on the upper lateral side of the support unit to rotate the housing left and right; and a damper arranged in a radial direction around the second drive motor to prevent shaking while the drone flies.

Patent Document 2 relates to a panorama auto labeling system based on an image captured by a drone, and the system comprises: a drone provided with a 360° camera, a positioning module for measuring the current location, and a posture measurement module for measuring postures at a position to acquire still images and moving images; an image contents database for storing the still images and the moving images acquired through the drone; a GIS database for storing GIS information; a PGM manager for matching panoramas and the GIS information; and a Web Application Server (WAS) 160 for providing a user with a result of matching by the PGM Manager on the basis of the web, wherein the WAS synchronizes still image contents and moving images contents acquired through the drone with data on the acquiring position and postures of the drone in the process of acquiring the contents, and synchronizes the panoramic still images and the moving images captured by the drone with GIS data to provide panoramic still image and moving image services of displaying additional information on the user terminal, and the drone includes: a drone body having a first installation space formed inside to have an open bottom, a forward and reverse rotation motor installed on the top of the first installation space to have a drive shaft positioned in the vertical direction, a spiral rod coupled to the drive shaft of the forward and reverse rotation motor to rotate in connection with the drive shaft when the forward and reverse rotation motor is driven, and a second installation space formed to have an open bottom while surrounding the first installation space; a plurality of connection units formed along the lower circumference of the drone body; a support installed in each connection unit in a form in which one end in the longitudinal direction is coupled to the connection unit and the other end in the longitudinal direction is horizontally extended toward the outside of the drone body; a propulsion unit installed on the opposite end of the one end coupled to the connection unit of the support to generate thrust; a landing unit provided under the support; a camera installation stand having a spiral tube installed on the top surface to be screw-coupled to the spiral rod of the drone body, accommodated in the first installation space of the drone body in a rotation-prevented state to be raised or lowered according to the forward and reverse rotation of the forward and reverse rotation motor, and having a camera installation space formed inside to have an open bottom so that a 360° camera is installed in the camera installation space; a plurality of cylinders installed at the four corner areas of the top surface of the second installation space of the drone body; a fine dust blocking box having a box-shaped structure with open top and bottom as both ends of four side surfaces are connected to each other, in which the four side surfaces are respectively inserted into a corresponding area of the second installation space of the drone body to couple the front end of the rod of a corresponding cylinder among the cylinders to a connection area formed between the four side surfaces, and penetrating-type openings for passing air are formed on the four side surfaces; fine dust filters detachably coupled to the openings on the four side surfaces of the fine dust blocking box; air blowing devices installed in the openings further inside than the fine dust filters on the four side surfaces of the fine dust blocking box; a pair of body covers rotatably coupled on both sides of the lower part of the drone body in the horizontal direction to open and close the first installation space of the drone body; a wireless communication module installed on the drone body to receive regional fine dust information from the outside; a wind direction sensor installed on the drone body to sense the current wind direction; and a control unit, in which a threshold value of external fine dust for controlling the operation of the air blowing devices is set in advance, for controlling the operation of an air blowing device at a corresponding location among the air blowing devices on the basis of the current wind direction information input through the wind direction sensor when the concentration of fine dust around the current location exceeds the threshold value of external fine dust on the basis of the current position information input from the positioning module of the drone and the regional fine dust information input through the wireless communication module, and the drone further includes a drone remote control terminal for transmitting a signal to the wireless communication module of the drone to control the operation of the 360° camera, wherein the control unit controls opening and closing of the cylinders and body covers according to the control signal of the drone remote control terminal input through the wireless communication module.

Patent Document 3 relates to a 3D image processing system using a drone, and the system comprises: a plurality of drones flying around a subject to be spaced apart from the subject by a predetermined distance to photograph the subject and obtain original images; a wireless control device for controlling operation of the drone to receive and store the original images captured by the drone in real time; and an image processing device for receiving a plurality of original images and matching the images into one three-dimensional image, wherein the wireless control device controls the drone to fly along a predetermined route at a position spaced apart from the subject by a predetermined distance, and store the original images in a storage unit included therein and configured of a plurality of repositories for storing a plurality of original images received from a plurality of drones, and the image processing device includes: a preprocessor for preprocessing the plurality of original images; a labeling unit for setting a label for each of a plurality of pre-processed images according to a shooting time; an image analysis unit for identifying viewpoints of labeled images on the basis of a subject appearing in an image, and classifying an image corresponding to each viewpoint of 0° to 360°; and an image matching unit for generating one three-dimensional image by matching images of each viewpoint.

Although various techniques using the panoramic images obtained through the drones are developed in this way, existing methods of capturing panoramic images using drones have limitations when it is desired to produce images in a speed way since the images should be captured using a special camera capable of 360° shooting, or a specific program needs to be used or extra time and manpower are required after shooting when images are captured using a general camera.

In addition, since the panorama service is separately implemented currently as individual services such as image capturing, panoramic image production, and panoramic web service, and the like, there is a burden of time and cost.

(Patent Document 0001) Korean Patent Registration No. 10-1718287
(Patent Document 0002) Korean Patent Registration No. 10-1762927
(Patent Document 0003) Korean Patent Registration No. 10-1896654

## DISCLOSURE OF INVENTION

## TECHNICAL PROBLEM

Therefore, the present invention has been made in view of the above problems, and it is an object of the present invention to provide a panoramic image providing system, which allows to work collectively and conveniently from capturing images using a drone to providing panoramic web service, and confirm the work progress in real time.

Another object of the present invention is to provide a panoramic image providing system, which allows to conveniently capture images through a general camera using a drone app (Dfos APP) when capturing images using a drone, and allows to utilize planar spatial data owned in advance or needed as the planar spatial data can be displayed and confirmed through a panorama service in the case where the planar spatial data is converted into panoramic spatial coordinates.

Another object of the present invention is to provide a panoramic image providing system, which creates values and ultimately generates profits as transactions are generated actively by connecting a service provider who provides the service (a photographer capturing images through a drone) and a service user who needs the service (a consumer of the panorama service) through advancement in business models and activation of panorama services.

## TECHNICAL SOLUTION

To accomplish the above objects, according to one aspect of the present invention, there is provided a panoramic image providing system comprising: a drone capable of capturing images as a camera is provided, and controlling flight and operation of the camera by remotely receiving signals; a provider terminal provided with a drone control app capable of controlling the drone, and collecting and transmitting image information received from the drone; a management server for collecting, storing, and editing the image information received from the provider terminal, and providing a panoramic image; and a user terminal for receiving the panoramic image information provided by the management server.

The management server is provided with an information storage DB for storing information including the collected and edited panoramic image information.

The management server converts position information of the drone controlled through the drone control app of the provider terminal into spatial coordinates.

## ADVANTAGEOUS EFFECTS

The panoramic image providing system according to the present invention has an effect of efficiently capturing images as images can be captured using a general camera rather than a 360° camera in the case of capturing images.

In addition, the present invention has an effect of reducing factors of time, cost, and manpower by integrating separated individual services and automating the parts that require manpower.

In addition, the present invention has an effect of allowing photographers and producers to produce panorama services without inconvenience as images are captured using a drone and the procedures are automated, and allowing service consumers to quickly obtain panoramic images desired by the consumers.

In addition, the present invention has an effect of creating values and generating profits as transactions are generated actively by connecting a service provider who provides the service (a photographer capturing images through a drone) and a service user who needs the service (a consumer of the panorama service) through advancement in business models and activation of panorama services.

## BRIEF DESCRIPTION OF THE DRAWINGS

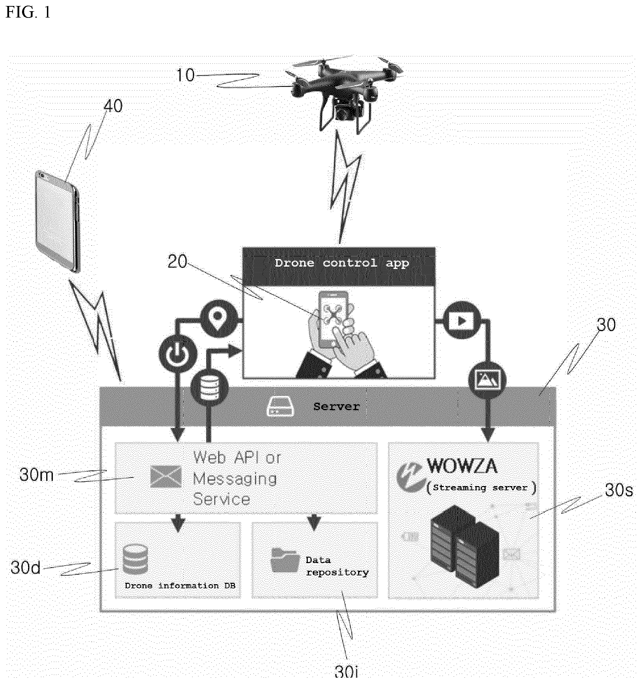

FIG. 1 is a view showing the configuration of a panoramic image providing system according to the present invention.

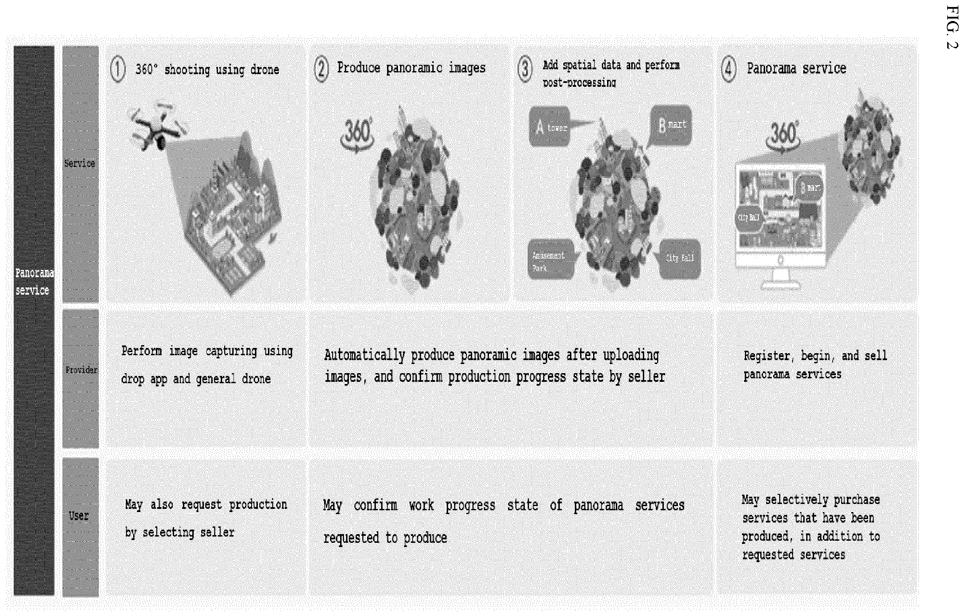

FIG. 2 is a view showing a list of service provided by the panoramic image providing system according to the present invention.

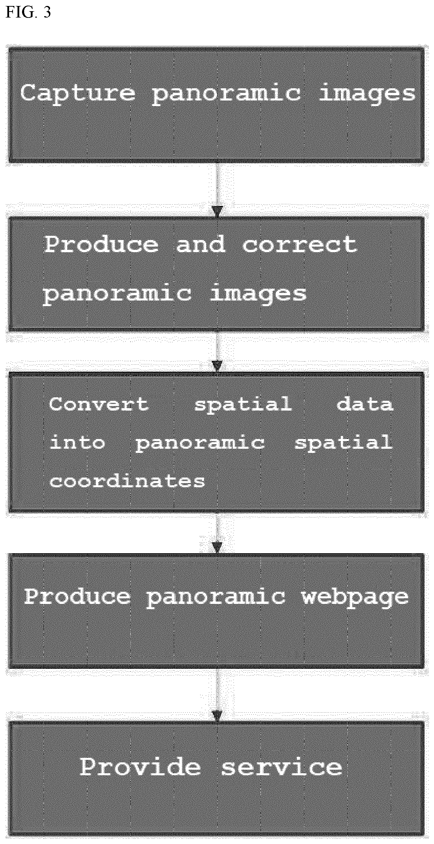

FIG. 3 is a flowchart illustrating the process of a service provided by the panoramic image providing system according to the present invention.
FIG. 4 is a view showing the coordinate system based on a panoramic image used in the panoramic image providing system according to the present invention.
FIG. 5 is a view showing panoramic coordinate mapping used in the panoramic image providing system according to the present invention.
FIG. 6 is a view showing 2D panoramic spatial coordinates used in the panoramic image providing system according to the present invention.
FIG. 7 is a view showing 3D panoramic spatial coordinates used in the panoramic image providing system according to the present invention.
FIG. 8 is a view showing a spatial image expressed as panoramic coordinates in the panoramic image providing system according to the present invention.
FIG. 9 is a view showing a panoramic view screen provided to the user by the panoramic image providing system according to the present invention.

## BEST MODE FOR CARRYING OUT THE INVENTION

As the present invention can be implemented by applying various changes, specific embodiments will be illustrated in the drawings and explained through detailed description. However, this is not intended to limit the present invention to specific embodiments, and should be understood as including all changes, equivalents, and substitutes included in the spirit and technical scope of the present invention.

In describing each drawing, similar reference numerals are used for similar components. When it is determined in describing the present invention that a detailed description of related known techniques may obscure the gist of the present invention, the detailed description will be omitted.

The present invention allows to work collectively and conveniently from capturing images using a drone to providing panoramic web service, and confirm the work progress in real time.

A panoramic image providing system according to the present invention includes: a drone 10 capable of capturing images as a camera is provided, and controlling flight and operation of the camera by remotely receiving signals; a provider terminal 20 provided with a drone control app capable of controlling the drone, and collecting and transmitting image information received from the drone; a management server 30 for collecting, storing, and editing the image information received from the provider terminal, and providing a panoramic image; and a user terminal 40 for receiving the panoramic image information provided by the management server.

The drone 10 is a drone generally used for capturing images, and is provided with a camera, receives signals transmitted from a control means and controls the operation of the drone itself, and is provided with a communication module for transmitting and receiving signals to control the operation of the camera, and the camera is preferably a commonly used general camera.

The communication module provided in the drone is a bidirectional wireless communication module.

The control means for controlling the drone is the provider terminal 20.

The provider terminal 20 may be a mobile terminal such as a commonly used smartphone, and may remotely control the camera by installing a drone control app provided by the management server 30.

The drone control app installed in the provider terminal has a camera control function for controlling the operation of the camera, as well as an operation control function for operating the drone, and the camera control function may be classified into a function that allows the camera to capture panoramic images or to perform a general image capturing function, and this may be automatically switched by clicking a button to perform normal shooting or panoramic shooting, and the capturing function may be included in the drone control app received from the management server to be automatically executed.

The drone control app may be provided with management of drone's mission, settings of flight mission and settings of aircraft (RC, camera, gimbal settings, etc.), 3D altitude flight API service function, and safety setting preparation function considering user safety.

In addition, information provided through the drone control app may include data for GIS background map service and web geographic information for control of the drone.

The management server 30 is a server that provides the provider terminal with the drone control app for controlling the drone and capturing panoramic images, and collects, edits, and provides panoramic images received from the provider terminal, and is provided with a panoramic image production tool to produce a panoramic image that can be provided to the user terminal by editing the collected panoramic images, and modify the produced image.

The management server 30 may convert an image into 2D and 3D spatial coordinates on the basis of the position information (longitude and latitude coordinates, shooting altitude) of the drone measured during the panoramic shooting, and then convert the 2D and 3D spatial coordinates into panoramic coordinates (pitch, yaw) corresponding to the panoramic coordinate system.

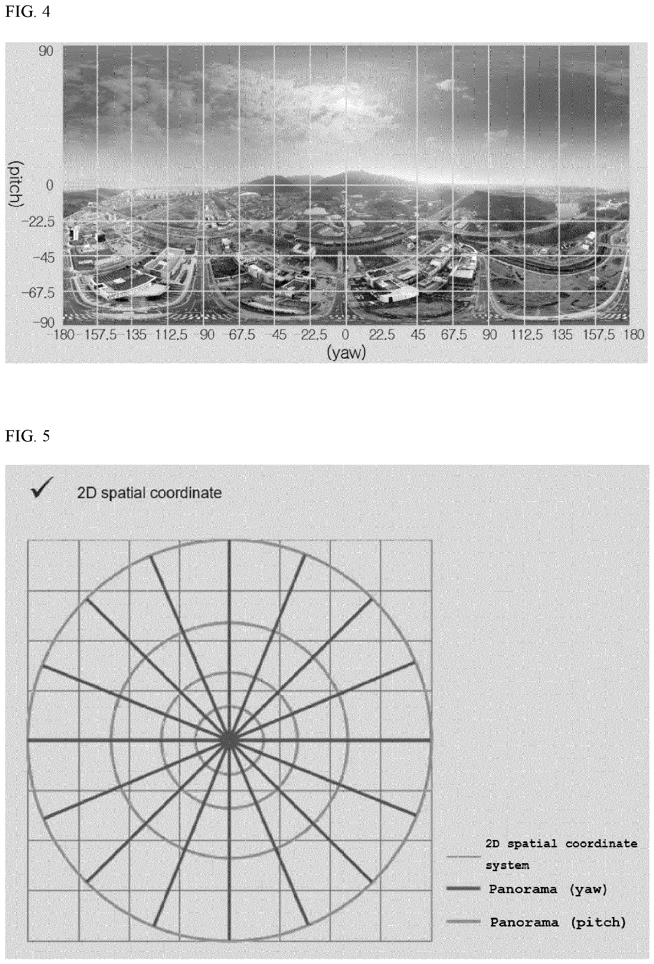

The coordinate conversion performed by the management server may be displayed on the basis of a panoramic image as shown in FIG. 4, or may be displayed in a 2D spatial coordinate system as shown in FIG. 5.

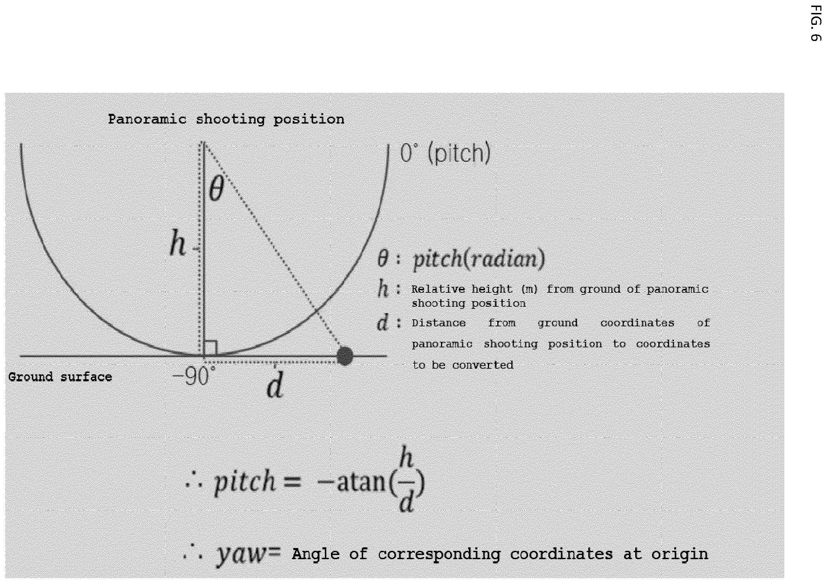

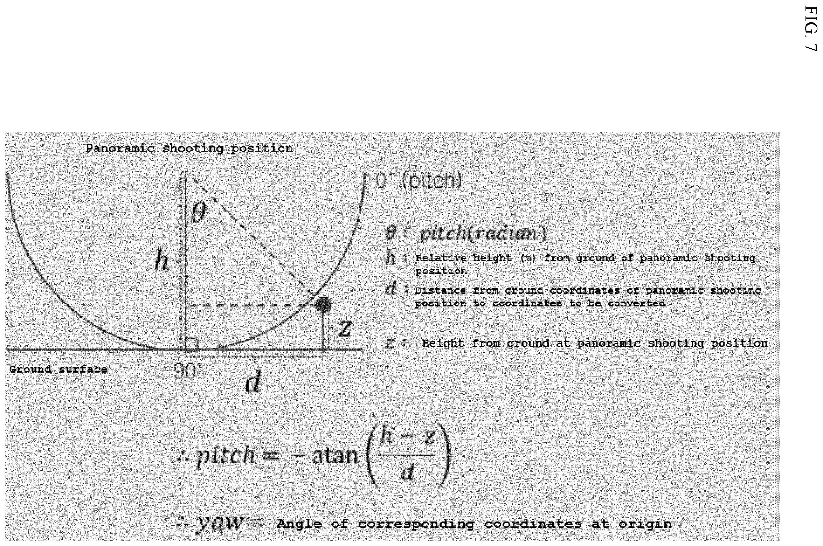

This may be done by the method shown in FIGS. 6 and 7, which converts spatial data into panoramic spatial coordinates.

That is, a 2D or 3D method may be used as the panoramic spatial coordinate conversion method, and as shown in FIG. 6, the 2D method is configured of pitch, which is the ground altitude value of the shooting position and the distance value between the ground coordinates of the shooting position and the coordinates to be converted, and yaw, which is the angle of the coordinates to be converted at the shooting position.

$$pitch = -atan\left(\frac{h}{d}\right)$$

Here, h is the relative altitude at the panoramic image shooting position, and d is the distance from the ground coordinates of the panoramic image shooting position to the coordinates to be converted.

As shown in FIG. 7, the 3D method is configured of pitch calculated from the ground altitude value of the shooting position, the distance value between the ground coordinates (2D) of the shooting position and the coordinates to be converted (2D), and the altitude value of the coordinates to be converted, and yaw, which is the angle of the coordinates to be converted at the shooting position.

$$pitch = -atan\left(\frac{h-z}{d}\right)$$

Here, h is the relative altitude at the panoramic image shooting position, d is the distance from the ground coordinates of the panoramic image shooting position to the coordinates to be converted, and z is a height from the ground at the panoramic image shooting position.

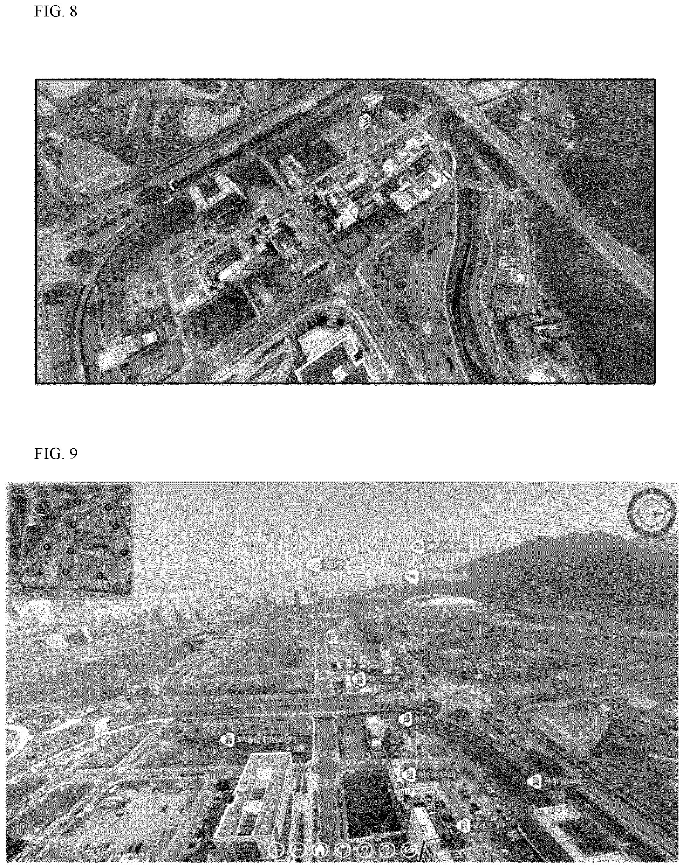

The panoramic image converted by the panoramic spatial coordinate conversion method described above may be displayed as shown in FIG. 8.

As described above, the management server 30 is provided with an information storage DB 30i for storing information including the collected and edited panoramic image information.

The information storage DB 30i stores information such as panoramic image information collected and edited as described above, provider information, and user information, and separately, a drone information DB 30d that stores only drone information may be further provided.

In addition, the management server 30 may be provided with a service module 30m to provide the panoramic image information to the user terminal using a messaging service, and a streaming server 30s to transmit information on the images captured by the drone to a control system, receive information on the moving images captured by the drone, and provide the moving image information to the user terminal.

The information provided by the management server configured as described above may be transmitted to the user terminal 40 using wired or wireless communication, and the user terminal may receive and confirm the information through an app provided by the management server or through the web, an example of which is shown in FIG. 9.

**DESCRIPTION OF SYMBOLS**

| | |
|---|---|
| 10: | Drone |
| 20: | Provider terminal |
| 30: | Management server |
| 30i: | Information storage DB | 30d: | Drone information DB |
| 30s: | Streaming server | 30m: | Service module |
| 40: | User terminal |

**Claims**

1. A panoramic image providing system comprising:

a drone 10 capable of capturing images as a camera is provided, and controlling flight and operation of the camera by remotely receiving signals;

a provider terminal 20 provided with a drone control app capable of controlling the drone, and collecting and transmitting image information received from the drone;

a management server 30, which is provided with an information storage DB 30i for storing information including collected and edited panoramic image information, for collecting, storing, and editing the image information received from the provider terminal, and providing a panoramic image, and converting position information of the drone controlled through the drone control app of the provider terminal into spatial coordinates; and

a user terminal 40 for receiving the panoramic image information provided by the management server, wherein the management server 30 converts the position information of the drone controlled through the drone control app of the provider terminal into 2D panoramic spatial coordinates and 3D panoramic spatial coordinates, wherein the spatial coordinates are configured of 2D panoramic spatial coordinates and 3D panoramic spatial coordinates, and

the 2D panoramic spatial coordinates are configured of pitch, which is a ground altitude value of a shooting position and a distance value between ground coordinates of the shooting position and coordinates to be converted, and yaw, which is an angle of the coordinates to be converted at the shooting position, wherein

$$pitch = -atan\left(\frac{h}{d}\right)$$

, here, h is a relative altitude at a panoramic image shooting position, and d is a distance from ground coordinates of the panoramic image shooting position to the coordinates to be converted, and

the 3D panoramic spatial coordinates are configured of pitch calculated from the ground altitude value at the shooting position, the distance value between the ground coordinates (2D) of the shooting position and the coordinates to be converted (2D), an altitude value of the coordinates to be converted, and yaw, which is an angle of the coordinates to be converted at the shooting position, wherein $pitch = -atan\left(\frac{h-z}{d}\right)$, here, h is a relative altitude at the panoramic image shooting position, d is a distance from the ground coordinates of the panoramic image shooting position to the coordinates to be converted, and z is a height from the ground at the panoramic image shooting position.

FIG. 1

FIG. 2

FIG. 3

```
Capture panoramic images
```

```
Produce and correct
panoramic images
```

```
Convert    spatial    data
into   panoramic   spatial
coordinates
```

```
Produce panoramic webpage
```

```
Provide service
```

FIG. 4

FIG. 5

FIG. 6

EP 4 391 547 A1

Panoramic shooting position

0° (pitch)

$\theta$

$h$

$\theta : pitch(radian)$

$h :$ Relative height (m) from ground of panoramic shooting position

$d :$ Distance from ground coordinates of panoramic shooting position to coordinates to be converted

Ground surface

$-90°$

$d$

$$\therefore pitch = -\text{atan}\left(\frac{h}{d}\right)$$

$\therefore yaw =$ Angle of corresponding coordinates at origin

FIG. 7

Panoramic shooting position

0° (pitch)

$\theta$ : $pitch(radian)$

$h$ : Relative height (m) from ground of panoramic shooting position

$d$ : Distance from ground coordinates of panoramic shooting position to coordinates to be converted

$z$ : Height from ground at panoramic shooting position

Ground surface

$-90°$

$$\therefore pitch = -\mathrm{atan}\left(\frac{h-z}{d}\right)$$

$\therefore yaw=$ Angle of corresponding coordinates at origin

FIG. 8

FIG. 9

# INTERNATIONAL SEARCH REPORT

| International application No. |
|---|
| **PCT/KR2022/004125** |

**A.     CLASSIFICATION OF SUBJECT MATTER**

**H04N 21/218**(2011.01)i; **H04N 21/81**(2011.01)i; **H04N 5/77**(2006.01)i; **H04N 5/232**(2006.01)i; **G03B 15/00**(2006.01)i; **G06T 5/50**(2006.01)i; **B64C 39/02**(2006.01)i

According to International Patent Classification (IPC) or to both national classification and IPC

**B.     FIELDS SEARCHED**

Minimum documentation searched (classification system followed by classification symbols)

H04N 21/218(2011.01); B29C 64/209(2017.01); B29C 64/227(2017.01); B64C 39/02(2006.01); B64D 47/08(2006.01); G03B 15/00(2006.01); G03B 17/56(2006.01); H04N 13/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 파노라마(panorama), 영상(image), 드론(drone), 카메라(camera)

**C.     DOCUMENTS CONSIDERED TO BE RELEVANT**

| Category* | Citation of document, with indication, where appropriate, of the relevant passages | Relevant to claim No. |
|---|---|---|
| A | KR 10-2017-0081488 A (SAMSUNG ELECTRONICS CO., LTD.) 12 July 2017 (2017-07-12)<br>See paragraphs [0021]-[0117]; and figure 1. | 1 |
| A | KR 10-2021-0069773 A (SIOT INC.) 14 June 2021 (2021-06-14)<br>See paragraphs [0059]-[0078]; and figure 1. | 1 |
| A | KR 10-2017-0067373 A (THE CATHOLIC UNIVERSITY OF KOREA INDUSTRY-ACADEMIC COOPERATION FOUNDATION) 16 June 2017 (2017-06-16)<br>See paragraphs [0036]-[0047]; and figures 1-3. | 1 |
| A | KR 10-2122755 B1 (NES&TEC CO., LTD.) 15 June 2020 (2020-06-15)<br>See claims 1-2. | 1 |
| A | KR 10-2001143 B1 (UNIST(ULSAN NATIONAL INSTITUTE OF SCIENCE AND TECHNOLOGY))<br>17 July 2019 (2019-07-17)<br>See claim 1. | 1 |

☑ Further documents are listed in the continuation of Box C.          ☑ See patent family annex.

| | |
|---|---|
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **27 June 2022** | **30 June 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2022/004125** |

**C.    DOCUMENTS CONSIDERED TO BE RELEVANT**

| Category* | Citation of document, with indication, where appropriate, of the relevant passages | Relevant to claim No. |
| --- | --- | --- |
| PX | KR 10-2347972 B1 (IGIS CO., LTD.) 07 January 2022 (2022-01-07)<br>See claim 1.<br>This document is a published earlier application that serves as a basis for claiming priority of the present international application. | 1 |

Form PCT/ISA/210 (second sheet) (July 2019)

## INTERNATIONAL SEARCH REPORT
**Information on patent family members**

International application No.

**PCT/KR2022/004125**

| Patent document cited in search report | | | Publication date (day/month/year) | Patent family member(s) | | | Publication date (day/month/year) |
|---|---|---|---|---|---|---|---|
| KR | 10-2017-0081488 | A | 12 July 2017 | CN | 107040698 | A | 11 August 2017 |
| | | | | CN | 107040698 | B | 20 July 2021 |
| | | | | EP | 3188467 | A1 | 05 July 2017 |
| | | | | EP | 3188467 | B1 | 05 August 2020 |
| | | | | US | 10551833 | B2 | 04 February 2020 |
| | | | | US | 2017-0192422 | A1 | 06 July 2017 |
| KR | 10-2021-0069773 | A | 14 June 2021 | KR | 10-2371216 | B1 | 07 March 2022 |
| KR | 10-2017-0067373 | A | 16 June 2017 | KR | 10-1754599 | B1 | 07 July 2017 |
| KR | 10-2122755 | B1 | 15 June 2020 | None | | | |
| KR | 10-2001143 | B1 | 17 July 2019 | KR | 10-2019-0051172 | A | 15 May 2019 |
| KR | 10-2347972 | B1 | 07 January 2022 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101718287
- KR 101762927
- KR 101896654